# EUROPÄISCHE PATENTSCHRIFT

(11) **EP 1 732 783 B1**
(45) Veröffentlichungstag und Bekanntmachung des Hinweises auf die Patenterteilung: **13.01.2010**
(21) Anmeldenummer: 05729001.7
(22) Anmeldetag: 22.03.2005
(51) Int. Cl.: B60N 2/48

(54) **KOPFSTÜTZE, INSBESONDERE FÜR EIN KRAFTFAHRZEUG**
HEADREST, PARTICULARLY FOR A MOTOR VEHICLE
APPUIE-TETE NOTAMMENT DESTINE A UN VEHICULE

(30) Priorität: 31.03.2004 DE 102004016474
(43) Veröffentlichungstag der Anmeldung: 20.12.2006
(73) Patentinhaber: Johnson Controls GmbH, 51399 Burscheid (DE)
(72) Erfinder: HARTLAUB, Silvio, 51069 Köln (DE)
(74) Vertreter: Hemmelmann, Klaus
(86) Internationale Anmeldenummer: PCT/EP2005/003014
(87) Internationale Veröffentlichungsnummer: WO 2005/097545

(56) Entgegenhaltungen:
- EP-A- 0 982 186
- EP-A- 1 159 153
- DE-A1- 19 923 909
- DE-C1- 19 941 712
- DE-U1- 20 114 944

## Beschreibung

Die Erfindung betrifft eine Kopfstütze für einen Fahrzeugsitz, bei welcher zumindest ein dem Kopf des Sitzinsassen zugewandtes Teilstück der Kopfstütze unfallbedingt unter der Wirkung einer Antriebseinrichtung aus einer Gebrauchsstellung zum Kopf des Sitzinsassen hin in eine Sicherheitsstellung verlagerbar ist (siehe z.B. DE 201 14 944 U1, dem Oberbegriff entsprechend).

Aus der Druckschrift DE 199 23 909 A1 ist eine weitere Kopfstütze bekannt. Sie besteht aus einem mit der Rückenlehne des Fahrzeugsitzes über Haltestangen starr, gegebenenfalls auch höhenverstellbar verbundenen Grundkörper, der in einem wannenartig ausgebildeten Polstersegment angeordnet ist. Bei einem Unfall wird das Polstersegment translatorisch zum Kopf des Sitzinsassen hin bewegt, um einem Schleudertrauma vorzubeugen. Die hierzu erforderliche Kraft wird durch eine in Verschieberichtung vorgespannte Feder innerhalb einer teleskopartigen Führungseinrichtung erzeugt.

In der Offenlegungsschrift DE 39 00 495 A1 wird eine weitere gattungsgemäße Kopfstütze beschrieben, bei welcher ein Polstersegment unfallbedingt gegenüber dem Grundkörper um eine feste Drehachse nach vorne schwenkbar ist. Als Antriebseinrichtung dient eine federbelastete Kolben/Zylinderanordnung in Verbindung mit einem Stützhebel, bei welcher der die Kolbenstange im Bereich der Drehachse am Grundkörper und der Zylinder am Polstersegment angelenkt ist.

Aus der Druckschrift DE 199 41 712 C1 ist ferner eine Kopfstütze bekannt, bei welcher ein verlagerbares Polsterelement mit dem Grundkörper über einen Scherenmechanismus verbunden ist, mittels dessen das Polsterelement aus einer Ruhestellung nach vorne in eine Gebrauchsstellung bewegbar ist.

Schließlich ist aus der Druckschrift EP 0 982 186 A2 eine Kopfstütze bekannt, die mittels einer Verbindungseinrichtung an der Rückenlehne eines Fahrzeugsitzes vorgesehen ist; an der Rückenlehne ist weiterhin eine Verstelleinrichtung beweglich vorgesehen, die eine Kulisse aufweist, an der die Verbindungseinrichtung der Kopfstütze derart geführt ist, daß eine Verstellung der Verstelleinrichtung in Sitzquerrichtung eine Verstellung der Kopfstütze in Sitzläugsrichtung ergibt.

### Aufgabe

Der Erfindung liegt die Aufgabe zugrunde, eine Kopfstütze mit einer einfach sowie kompakt aufgebauten und wirkungsvollen Antriebseinrichtung bereitzustellen.

### Lösung

Die Aufgabe wird erfindungsgemäß durch die Kennzeichnenden Merkmale des Anspruchs 1 gelöst.

Die Antriebseinrichtung weist mindestens zwei unter Wirkung einer ersten Kraft zueinander bewegliche Bauteile auf, von denen mindestens ein Bauteil eine auf das andere Bauteil wirkende, gegenüber der ersten Kraftrichtung geneigte Schrägfläche aufweist, mittels derer eine von der ersten Kraftrichtung abweichende zweite, auf die Kopfstütze übertragbare Kraft erzeugbar ist. Dies kann beispielsweise nach dem Lösen einer die Bauteile in Initialstellung haltenden Verriegelungseinrichtung erfolgen.

Zur Anwendung des Keilprinzips ist es grundsätzlich ausreichend, wenn eines der Bauteile mit einer entsprechenden Schrägfläche ausgestattet ist.

Nach einer bevorzugten Ausführungsform sind jedoch beide Bauteile mit miteinander wirkenden, parallel verlaufenden Schrägflächen ausgestattet.

Nach einer ersten Ausführung der Erfindung ist die Kopfstütze über einen Gelenkhebel mit der Rückenlehne des Fahrzeugsitzes drehbeweglich verbunden, dessen sich jenseits der Drehachse erstreckender Hebelarm von der Antriebseinrichtung nach hinten verlagerbar ist, wodurch die Kopfstütze als Ganzes zum Kopf des Sitzinsassen hin bewegbar ist.

Vorzugsweise weist die Kopfstütze jedoch einen Grundkörper und ein gegenüber diesem unter der Wirkung der Antriebseinrichtung zum Kopf des Sitzinsassen hin verlagerbares Polstersegment auf, da die zu beschleunigende Masse bei dieser Ausbildung verringert wird.

Vorzugsweise sind die Bauteile zueinander gleitreibend relativbeweglich, sind also nicht mit Wälzkörpern versehen, welche auf den Schrägflächen abrollen. Hierdurch wird der Aufbau der Antriebseinrichtung vereinfacht, ferner kann die Reibung gezielt dazu eingesetzt werden, die Kopfstütze beim Erreichen der Sicherheitsstellung in dieser Position reibschlüssig zu halten.

Die Relativbewegung zwischen den Bauteilen weist erfindungsgemäß Sowohl eine translatorische Komponente als auch eine Rotation zwischen den Bauteilen auf.

Somit sind die Bauteile unter der Wirkung der ersten Kraft gegeneinander in Drehung versetzbar, wobei durch die Schrägfläche(n) eine translatorische Relativbewegung der Bauteile in Richtung der Drehachse erzeugbar ist.

Nach einer besonderen Ausbildung der Erfindung weist die Antriebseinrichtung mindestens drei zueinander bewegliche Bauteile auf, von denen das mittlere Bauteil gegenüber den anderen, drehfesten Bauteilen drehbar ist.

Bei den beiden zuletzt genannten Ausbildungen sind die Bauteile mit Vorteil in Gebrauchsstellung teleskopartig ineinander angeordnet, wobei die Schrägfläche(n) auf der inneren und/oder äußeren Radialfläche mindestens eines Bauteils angeordnet und gewindeartig ausgebildet ist/sind. Hierdurch wird ein besonders kompakter Aufbau der Antriebseinrichtung ermöglicht.

Die Verriegelungseinrichtung kann grundsätzlich zwischen den relativbeweglichen Bauteilen der Antriebseinrichtung wirken. Vorzugsweise wird das Polsterelement durch die Verriegelungseinrichtung jedoch unmittelbar am Grundkörper verriegelt. Durch diese Ausbildung können weitere, direkt zwischen Grundkörper und Polsterelement in Richtung der Verschiebung vorgespannte Federmittel vorgesehen werden, welche die Antriebseinrichtung unterstützen.

Falls die Reibung zwischen den Bauteilen nicht ausreicht, um die Kopfstütze nach Erreichen der Sicherheitsstellung zu halten, können die Schrägflächen ferner mit einer Verzahnung versehen werden, mittels derer die Kopfstütze spätestens beim Erreichen der Sicherheitsstellung zumindest temporär arretierbar ist. Die Arretierung wird vorzugsweise durch den Aufprall des Kopfes auf die Kopfstütze ausgelöst und nachfolgend wieder aufgehoben, wobei die Kopfstütze nach Beendigung der Arretierung durch eine Feder wieder in die Initialstellung zurückbewegt werden kann.

Die erste Kraft ist mit Vorteil durch einen innerhalb der Kopfstütze angeordneten mechanischen oder chemischen Energiespeicher, beispielsweise Federn, pyrotechnische Antriebe oder dergleichen, erzeugbar.

Alternativ kann bei einem mit einer erfindungsgemäßen Kopfstütze ausgestatteten Fahrzeugsitz vorgesehen sein, dass die erste Kraft und/oder die Kraft zur Entriegelung der Verriegelungseinrichtung zumindest teilweise im Fahrzeugsitz durch die Massenträgheit des Sitzinsassen erzeugbar ist. Eine hierzu geeignete Vorrichtung wird beispielsweise in der erst am 20.04.06 offengelegten deutschen Patentanmeldung DE 10 2004 048 910.6 beschrieben.

Die erste Kraft und/oder die Kraft zur Entriegelung der Verriegelungseinrichtung kann ferner zumindest teilweise durch eine unfallbedingte Verlagerung des Fahrzeugsitzes oder Teile desselben relativ zur Fahrzeugkarosserie bewirkt werden, oder auch durch die Deformation der Fahrzeugkarosserie. Weiterhin bietet sich ein Gurtstraffer zur Erzeugung dieser Kräfte an.

Zwischen im oder jenseits des Fahrzeugsitzes angeordneten Krafterzeugungsort für die erste Kraft und der Kopfstütze sind Kraftübertragungsmittel anzuordnen, die beispielsweise als Bowdenzug ausgebildet sind. Gleichfalls geeignet sind grundsätzlich jedoch auch Gestänge oder hydraulische Übertragungsmittel.

### Figuren

Die Figuren stellen beispielhaft und schematisch verschiedene Ausführungen der Erfindung dar.

Es zeigen:
- Fig. 1a, b: einen Fahrzeugsitz mit einer erfindungsgemäßen Kopfstütze,
- Fig. 2: einen Fahrzeugsitz mit einer Kopfstütze nach Anspruch 4,
- Fig. 3a-d: Schnitte durch eine in die Kopfstütze nach Fig. 2 einsetzbare Antriebseinrichtung in unterschiedlichen Funktionsstellungen,
- Fig. 4a, b: das Funktionsprinzip einer weiteren erfindungsgemäßen Kopfstütze,
- Fig. 5a, b: eine in der Kopfstütze nach Fig. 4 einsetzbare Antriebseinrichtung,
- Fig. 6: den seitlichen Schnitt durch eine Kopfstütze mit einer Verriegelungseinrichtung nach Anspruch 9,
- Fig. 7: eine erfindungsgemäße Antriebsseinrichtung mit einer zur Arretierung in Sicherheitsstellung geeignete Verzahnung,
- Fig. 8: einen Fahrzeugsitz mit einer erfindungsgemäßen Kopfstütze nach Anspruch 13,
- Fig. 9: den Schnitt durch eine in die Kopfstütze nach Fig. 8 einsetzbare Antriebeinrichtung in Sicherheitsstellung.

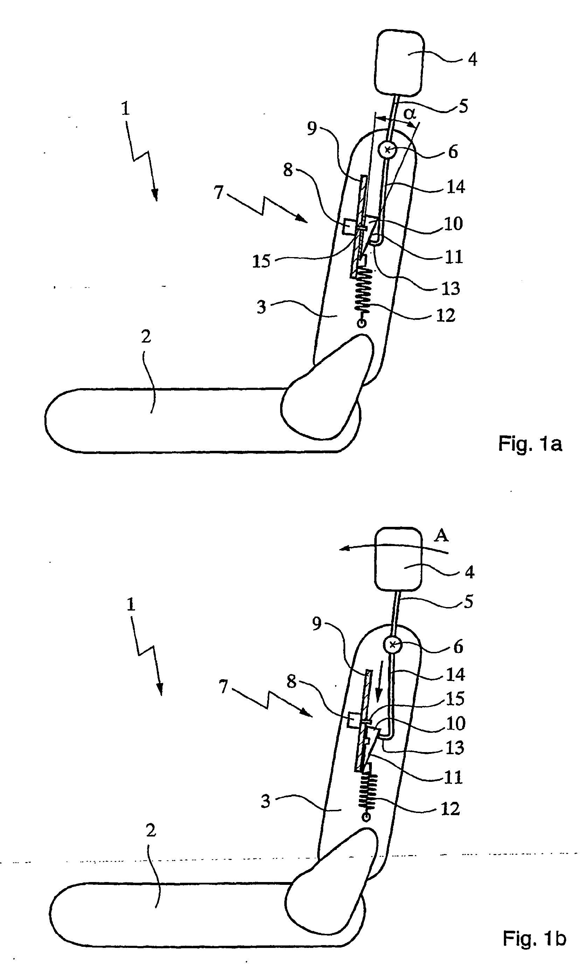

Der Fahrzeugsitz 1 nach Fig. 1 a, b besteht aus einem Sitzteil 2 und einer mit diesem neigungsverstellbar verbundenen Rückenlehne 3, welche mit einer Kopfstütze 4 ausgestattet ist. Die paarigen Haltestangen 5 der Kopfstütze 4 sind im oberen Lehnenbereich über ein Gelenk 6 mit der Rückenlehne 3 schwenkbar verbunden, so dass die Kopfstütze 4 bei einem Unfall durch Drehung der Haltestangen 5 im Gelenk 6 aus ihrer Gebrauchsstellung nach Fig. 1a zum Kopf des Sitzinsassen hin in Richtung des Pfeils A in eine Sicherheitsstellung (Fig. 1 b) schwenkbar ist. Durch diese Verlagerung wird einer Überdehnung der Nackenwirbel des Sitzinsassen entgegengewirkt (Anti-Whiplash-Effekt).

Die für diese Verlagerung erforderliche Kraft wird durch eine Antriebseinrichtung 7 erzeugt, die in normalem Gebrauch durch eine Verriegelungseinrichtung 8 gesperrt ist. Die Antriebseinrichtung 7 besteht aus einem in einer vertikalen Längsführung 9 gelagerten, keilförmigen ersten Bauteil 10 mit einer Schrägfläche 11, die gegenüber der Kraftrichtung einer vorgespannten Feder 12 um einen Winkel α geneigt ist. An der Schrägfläche 11 liegt ein zweites Bauteil 13 in Form eines mit den Haltestangen 5 starr verbundenen, sich jenseits des Gelenks 6 in den Rahmen der Rückenlehne 3 erstreckenden Hebelarms 14 an. Die Verriegelungseinrichtung 8 ist mit einem verschiebbaren Bolzen 15 ausgestattet, welcher in Blockierstellung durch die Längsführung 9 hindurch in das erste Bauteil 10 führt und dieses arretiert.

Bei einem Unfall, insbesondere einem Aufprall auf das Heck eines erfindungsgemäß ausgestatteten Fahrzeugs, wird die Verriegelungseinrichtung 8 durch Zurückziehen des Bolzens 15 gelöst (Fig. 1 b). Dies kann beispielsweise durch einen mit der Steuerung des Fahrzeugairbags gekoppelten Elektromagneten erfolgen. Das keilförmige erste Bauteil 10 kann sich nun unter der Wirkung der Feder 12 in Richtung nach unten bewegen, wobei die Schrägfläche 11 das an dieser reibend anliegende zweite Bauteil 13, nämlich das untere Ende des Hebelarms 14, nach hinten verlagert. Dabei wird die Kopfstütze 4 zwangsläufig in die Sicherheitsstellung verschwenkt.

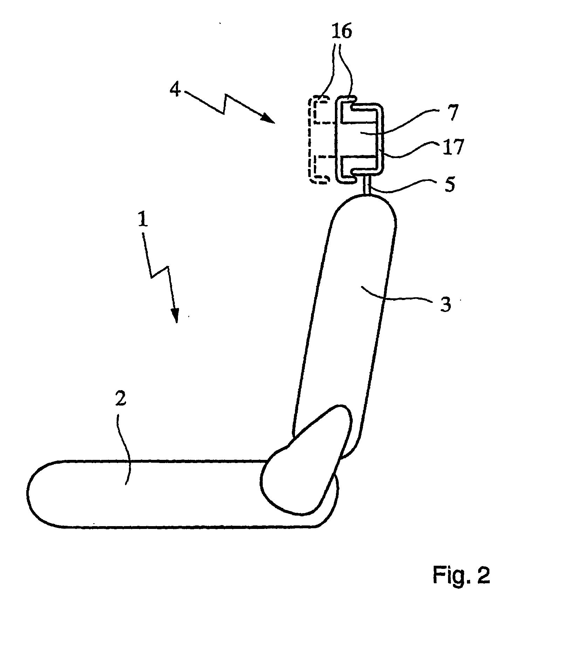

Bei dem Fahrzeugsitz 1 nach Fig. 2 wird die Kopfstütze 4 bei einem Unfall nicht als Ganzes in eine Sicherheitsstellung überführt, sondern nur ein Teilstück in Form eines Polsterelements 16 zum Kopf des Sitzinsassen hin verlagert. Der Grundkörper 17 der Kopfstütze 4 ist hingegen starr, ggf. auch höhenverstellbar über die Haltestangen 5 mit der Rückenlehne 3 verbunden. Innerhalb der Kopfstütze ist zwischen Polsterelement 16 und Grundkörper 17 eine nachfolgend im Einzelnen beschriebene Antriebseinrichtung 7 angeordnet, welche die Verlagerung bewirkt.

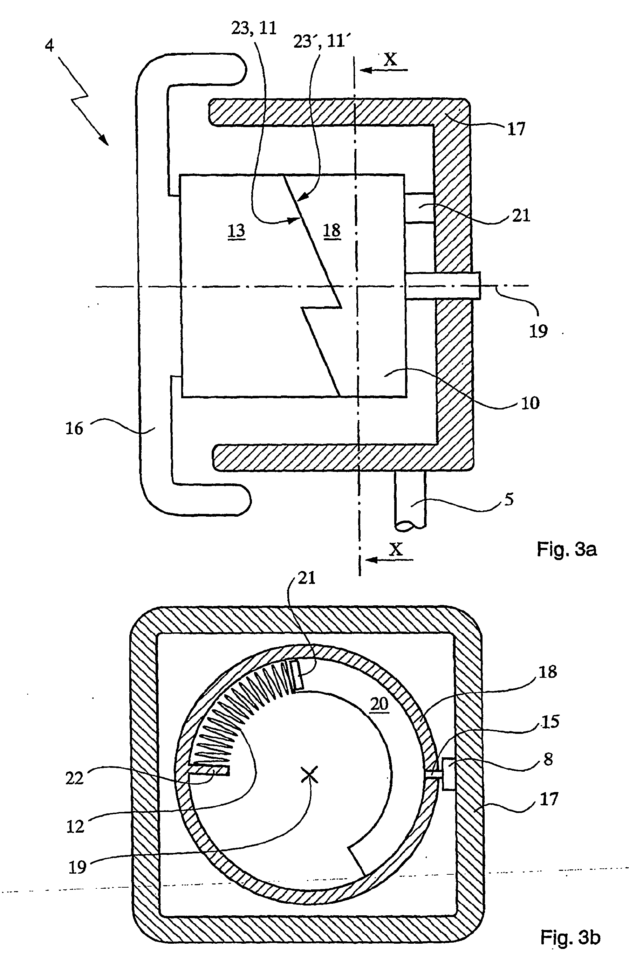

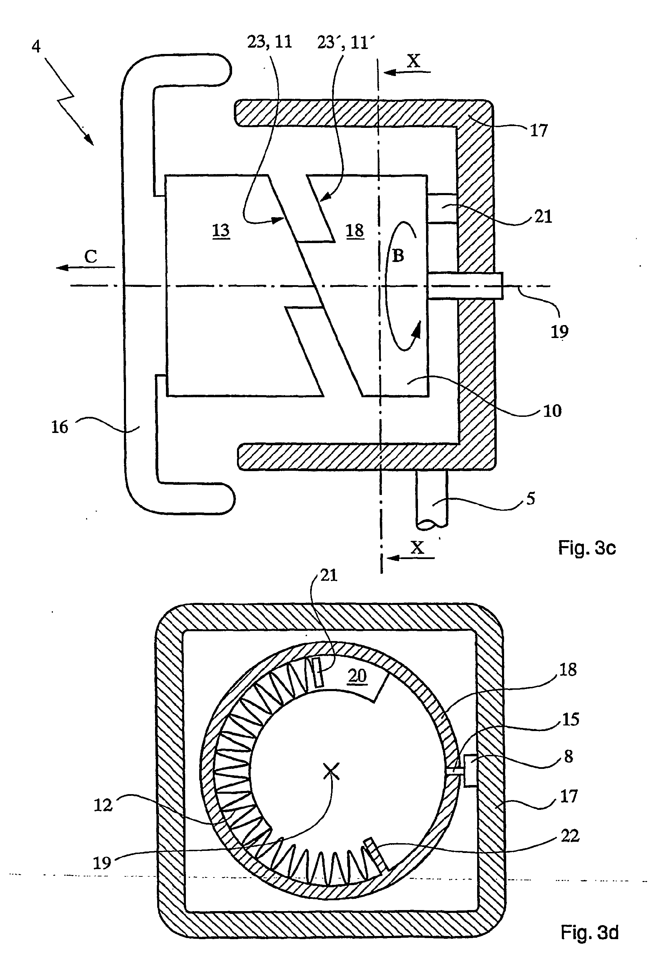

Die Antriebseinrichtung 7 (Fig. 3) besteht aus einem ersten Bauteil 10 in Form eines Hohlzylinders 18, das um eine Drehachse 19 drehbar mit dem Grundkörper 17 der Kopfstütze 4 verbunden ist. Eine im Bereich einer bogenförmigen Ausnehmung 20 axial in den Hohlzylinder 18 ragende Lasche 21 des Grundkörpers 17 dient der Abstützung einer im Hohlzylinder 18 angeordneten, vorgespannten Feder 12, die mit ihrem anderen Ende an einem radial nach innen ragenden Vorsprung 22 des Hohlzylinders 18 anliegt. Eine Verriegelungseinrichtung 8 in der zuvor bereits beschriebenen Ausbildung sperrt in der Gebrauchsstellung nach Fig. 3a, b durch einen in den Hohlzylinder 18 eingeschobenen Bolzen 15 die Drehung des Hohlzylinders 18 relativ zum Grundkörper 17 und hält die Feder 12 dadurch unter Spannung.

Die vordere Stirnfläche 23 des Hohlzylinders 18 ist mit über den Umfang desselben verteilt angeordneten, sägezahnartigen Schrägflächen 11 ausgestattet, an denen die Schrägflächen 11' eines kongruent gestalteten zweiten Bauteils 13 anliegen, das gleichfalls als Hohlzylinder 18' ausgebildet ist. Der Hohlzylinder 18' ist starr und damit auch drehfest mit dem Polsterteil 16 verbunden.

Bei einem Unfall (Fig. 3 c, d) wird die Verriegelungseinrichtung 8 gelöst, so dass die sich entspannende Feder 12 das erste Bauteil 10 (Hohlzylinder 18) gegenüber dem zweiten Bauteil 13 (Hohlzylinder 18') verdreht (Pfeil B). Die aufeinander reibenden Schrägflächen 11, 11' bewirken dabei eine axiale Kraft und dine Vorverlagerung des Hohlzylinders 18' in Richtung der Drehachse 19 und damit auch eine Verschiebung des Polsterkörpers 16 gegenüber dem Grundkörper 17 in Richtung des Pfeiles C.

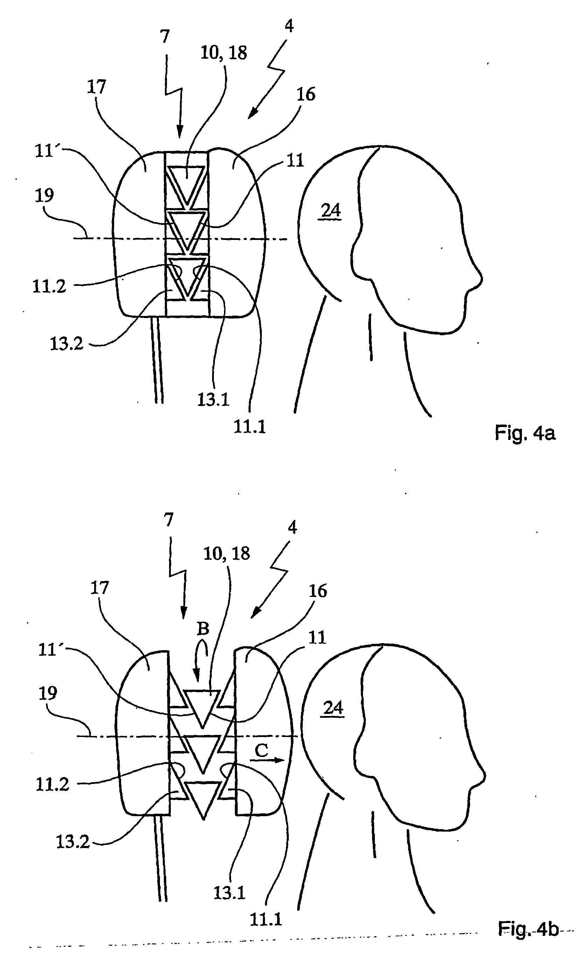

Bei der in den Figuren 4a, b dargestellten Kopfstütze 4 wird das Polstersegment 16 gegenüber dem Grundkörper 17 aus der Gebrauchsstellung (Fig. 4a) in die Sicherheitsstellung (Fig. 4b) in Richtung des Pfeiles C durch eine Antriebseinrichtung 7 verlagert, welche zwei mit dem Polstersegment 16 bzw. dem Grundkörper 17 starr verbundene Bauteile 13, 13.1 mit Schrägflächen 11.1, 11.2 aufweist. Zwischen den Bauteilen 13.1, 13.2 ist ein weiteres Bauteil 10 in Form eines Hohlzylinders 18 mit beidseitig axial wirksamen Schrägflächen 11, 11' angeordnet, welches um die horizontale, in Fahrtrichtung verlaufende Achse 19 (-X-Richtung des Fahrzeugs) drehbar ist. Bei seiner Drehung (Pfeil B) werden die Bauteile 13.1, 13.2 auseinandergetrieben, wodurch sich das Polstersegment 16 zum Kopf 24 hin bewegt.

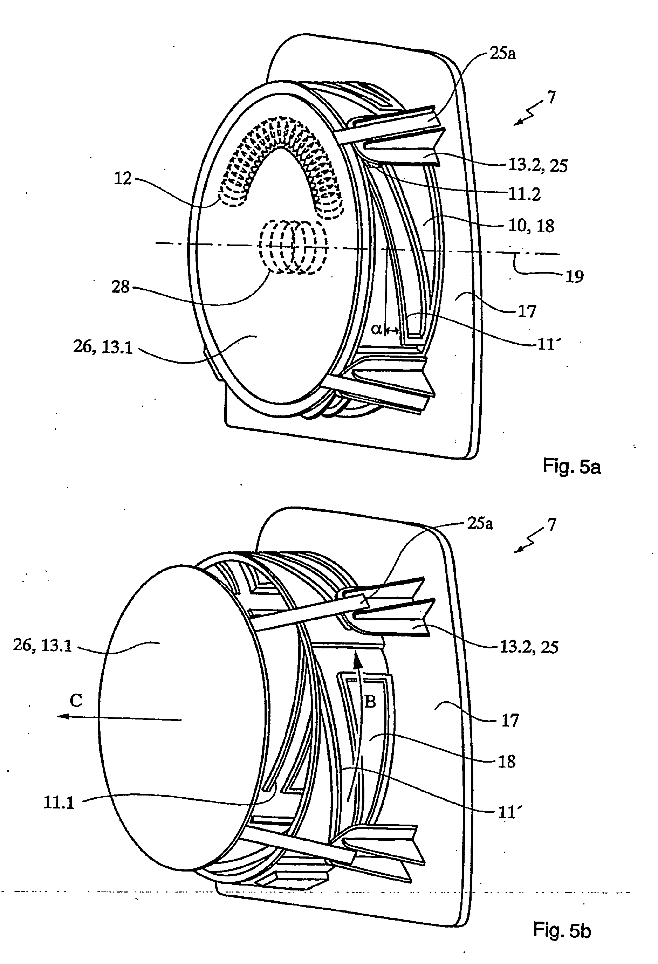

Eine hierzu einsetzbare Antriebseinrichtung 7 ist in den Figuren 5a, b dargestellt. Sie umfaßt als drehfeste Bauteile 13.1, 13.2 auskragende vier zirkular angeordnete Vorsprünge 25, die den Grundkörper 17 angeformt sind, sowie einen Zylinder 26, welcher drehfest mit dem Polstersegment verbunden ist. Die Bauteile 13.1 und 13.2 sind durch Linearführungen 25a zueinander gegen Verdrehung gesichert. Von den Bauteilen 13.1 und 13.2 teleskopartig eingefaßt ist der drehbare Hohlzylinder 18, der auf seinen inneren und äußeren Radialflächen kulissenartige Schrägflächen 11' (außen), 11 (innen, nicht sichtbar) aufweist. Diese sind gegenüber der Kraftrichtung einer innerhalb der Antriebseinrichtung 7 in tangentialer Richtung vorgespannten, nur angedeutete Feder 12, welche sich am Hohlzylinder 18 sowie am Grundkörper 17 abstützt, um einen Winkel α von etwa 10° bis 30°, vorzugsweise 15° bis 20°, geneigt. Je größer die Neigung eingestellt wird, umso zügiger wird das Polsterteil 16 bei einem Unfall nach vorne bewegt. Allerdings nehmen mit steigendem Winkel α auch die hierzu erforderlichen Federkräfte zu und die gewünschte Hemmung einer Rückverlagerung nach Erreichen der Sicherheitsstellung ab.

In die äußeren kulissenartigen Schrägflächen 11' greifen passend geformte, von den Vorsprüngen 25 radial nach innen ragende Schrägflächen 11.2 ein, während die inneren Schrägflächen 11 des Hohlzylinders 18 mit kongruenten Schrägflächen 11.1 des topfartig ausgehöhlten Zylinders 26 zusammenwirken. Im Inneren der teleskopartigen Antriebseinrichtung 7 ist, ähnlich der Ausführung nach Fig. 3, eine äquidistant zur inneren Mantelfläche des Hohlzylinders 18 verlaufende Feder 12 angeordnet.

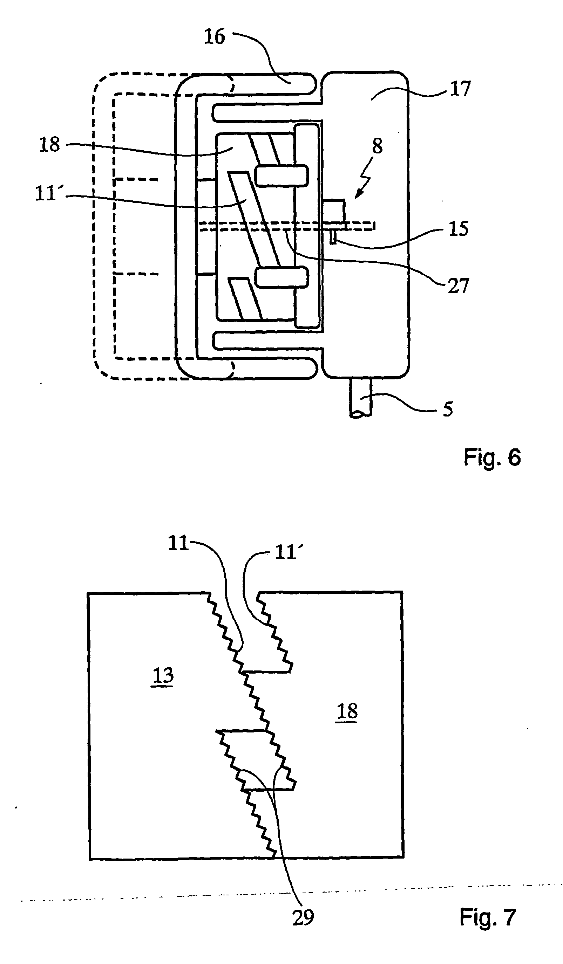

In Gebrauchsstellung (Fig. 5a) sind der Grundkörper 17 und das Polsterelement 16 durch eine in Richtung der Achse 19 wirkende Verriegelungseinrichtung 8 (siehe Fig. 6) zueinander festgelegt, so dass nicht nur eine axiale Verlagerung der Bauteile 10, 13.1 und 13.2, sondern deren Drehung zueinander verhindert wird. Die Feder 12 verbleibt daher in ihrem vorgespannten Zustand. Wird die Verriegelungseinrichtung 8 gelöst, vermag die Feder 12 den Hohlzylinder 18 gegenüber dem Bauteil 13.2 des Grundkörpers 17 derart zu verdrehen (Pfeil B), dass dieser in Richtung des Pfeils C nach vorne verschoben wird. Da hierbei zwangsläufig auch eine Drehung des Hohlzylinders 18 relativ zum Bauteil 13.1 des Polstersegments 16 erfolgt, werden auch diese Elemente zueinander linear in Richtung des Pfeils C verlagert. Die lineare Gesamtverlagerung des Polstersegments 16 zum Grundkörper 17 ist eine Überlagerung der Verschiebungen des Bauteils 13.2 relativ zum drehbaren Hohlkörper 18 sowie des Hohlkörpers 18 relativ zum Bauteil 13.1.

Durch Zurückdrehen des Hohlzylinders 18, beispielsweise durch ein von außen durch die Kopfstütze 4 hindurchführbares Werkzeug, wird die Antriebseinrichtung 7 unter Vorspannung der Feder 12 wieder in ihre Ausgangsposition gebracht.

Grundsätzlich ist es möglich, die bei einem Unfall lösbare Verriegelung der Antriebseinrichtung 7 auch durch eine Sperreinrichtung vorzunehmen, welche die Drehung von Hohlzylinder 18 und Bauteil 13.2 zueinander unmittelbar verhindert, beispielsweise mittels eines durch den Vorsprung 25 radial nach innen in den Hohlzylinder 18 einrastenden Bolzen. Durch die mit Vorteil eingesetzte, in axialer Richtung wirkende Verriegelungseinrichtung 8, die beispielsweise aus einer starr an das Bauteil 13.1 angebrachten, innerhalb des Hohlzylinders 18 verlaufenden und das Bauteil 13.1 durchdringenden Stange 27 bestehen kann (siehe Fig. 6), besteht jedoch die Möglichkeit, innerhalb der Antriebseinrichtung 7 eine weitere, ausschließlich in Richtung der Achse 19 wirkende, sich an den Bauteilen 13.1 und 13.2 abstützende Feder 28 anzuordnen, welche die Bauteile 13.1 und 13.2 nach dem Lösen der Verriegelungseinrichtung 8 unmittelbar axial auseinandertreibt.

Anstelle einer Drehung können die Schrägflächen 11, 11' gegenüber den kongruent ausgebildeten Schrägflächen 11.1, 11.2 naturgemäß auch linear nach unten verschoben werden, um die patentgewollte Wirkung zu erzielen. Ebenso ist denkbar, die Schrägflächen 11, 11' nicht eben, sondern gekrümmt auszuführen.

Ferner können die Schrägflächen 11, 11 wie in Fig. 7 dargestellt, mit einer Verzahnung 29 versehen werden, welche einer ungewollten Rückstellung der Antriebseinrichtung 7 nach Erreichen der Sicherheitsstellung entgegenwirkt. Falls die Schrägflächen 11, 11 11.1,11.2 Teil einer kulissenartigen Führung sind, wie in den Figuren 5a und 5 b dargestellt, sind diejenigen Flächen der Kulissenführung mit einer Verzahnung zu versehen, welche beim Antrieb in erfindungsgemäßer Weise den Vortrieb des Polsterelements 16 bewirken und nachfolgend durch eine vom Polsterelement 16 in Richtung des Grundkörpers 17 wirkende Kraft aufeinander gepresst werden.

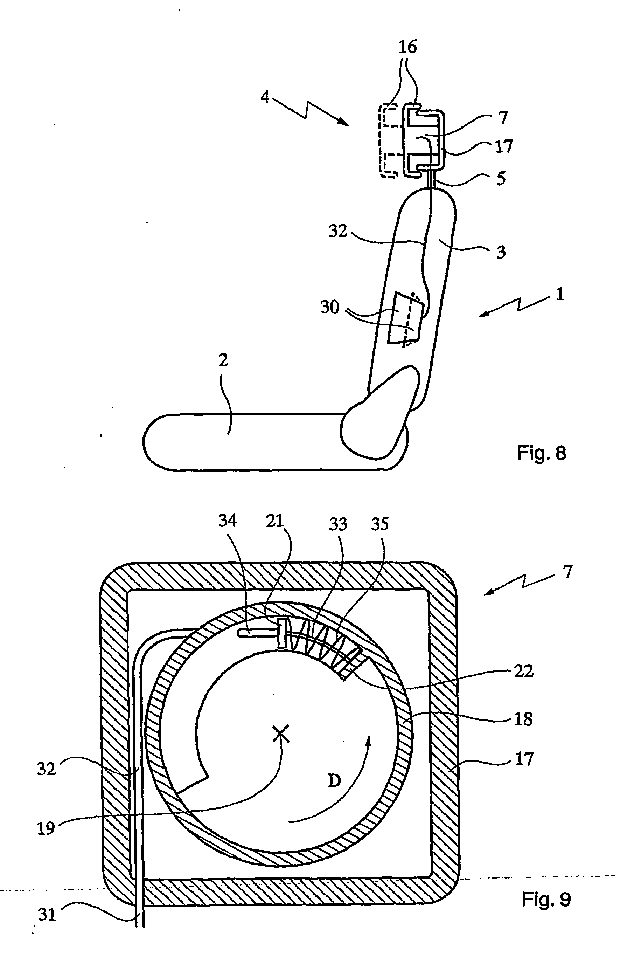

Fig. 8 zeigt einen Fahrzeugsitz 1 mit einer erfindungsgemäßen Kopfstütze 4, bei welcher die erste Kraft mittelbar durch in der Rückenlehne 3 des Fahrzeugsitzes befindliche Trägheitserfassungsmittel 30 erzeugt wird. Diese werden bei einem Heckaufprall durch ein infolge Massenträgheit auftretendes Eintauchen des Sitzinsassen in die Polsterung der Rückenlehne 3 betätigt und erfahren dabei eine Verlagerung aus der Initialposition in die gestrichelt dargestellte Crashposition. Ein Kraftübertragungsmittel 31 in Form eines Bowdenzugs 32 verbindet die Trägheitserfassungsvorrichtung 30 durch eine Haltestange 5 hindurch mit der Kopfstütze 4. Bei einem Heckaufprall führt die rückwärtige Verlagerung des Trägheitserfassungsmittels 30 somit zu einer Vorverlagerung des Polsterelements 16 in dessen gleichfalls gestrichelt gezeigte Sicherheitsstellung.

In Anlehnung an die Darstellung nach Fig. 3b, 3d ist in Fig. 9 die Anbindung des Bowdenzugs 32 an die Antriebseinrichtung 7 dargestellt. Der Bowdenzug 32 ist über seine verschiebliche Seele 33 mit dem Vorsprung 22 des drehbaren Hohlzylinders 18 verbunden, während sich seine Hülle 34 an der Lasche 21 des Grundkörpers 17 abstützt. Bei einem Heckaufprall wird die Seele 33 in die Hülle 34 hineingezogen und verdreht dabei den Hohlzylinder 18 in Richtung des Pfeils D. Eine an Lasche 21 und Vorsprung 22 angreifende Rückstelldruckfeder 35 verlagert die Kopfstütze 4 nach dem Abklingen der Trägheitskraft durch Drehung des Hohlkörpers 18 entgegen der Richtung des Pfeils D aus der Sicherheitsstellung in die Gebrauchsstellung zurück.

### Bezugszeichen

- 1: Fahrzeugsitz
- 2: Sitzteil
- 3: Rückenlehne
- 4: Kopfstütze
- 5: Haltestange
- 6: Gelenk
- 7: Antriebseinrichtung
- 8: Verriegelungseinrichtung
- 9: Längsführung
- 10: Bauteil
- 11, 11': Schrägflächen
- 12: Feder
- 13: Bauteil
- 14: Hebelarm
- 15: Bolzen
- 16: Polsterelement
- 17: Grundkörper
- 18: Hohlzylinder
- 19: Drehachse
- 20: Ausnehmung
- 21: Lasche
- 22: Vorsprung
- 23, 23': Stirnflächen
- 24: Kopf (des Sitzinsassen)
- 25: Vorsprung
- 25a: Linearführung
- 26: Zylinder
- 27: Stange
- 28: Feder
- 29: Verzahnung
- 30: Trägheitserfassungsvorrichtung
- 31: Kraftübertragungsmittel
- 32: Bowdenzug
- 33: Seele
- 34: Hülle
- 35: Rückstelldruckfeder

## Patentansprüche

1. Kopfstütze (4) für einen Fahrzeugsitz (1), bei welcher zumindest ein dem Kopf (24) des Sitzinsassen zugewandtes Teilstück der Kopfstütze unfallbedingt unter der Wirkung einer Antriebseinrichtung (7) aus einer Gebrauchsstellung zum Kopf des Sitzinsassen hin in eine Sicherheitsstellung verlagerbar ist, wobei die Antriebseinrichtung (7) mindestens zwei unter Wirkung einer ersten Kraft zueinander bewegliche Bauteile (10, 13) aufweist, von denen mindestens ein Bauteil (10) eine auf das andere Bauteil (13) wirkende, gegenüber der ersten Kraftrichtung geneigte Schrägfläche (11) aufweist, mittels derer eine von der ersten Kraftrichtung abweichende zweite, auf die Kopfstütze (4) übertragbare Kraft erzeugbar ist, **dadurch gekennzeichnet, dass** die Relativbewegung zwischen den Bauteilen (10, 13) translatorisch sowie rotatorisch ist und die Bauteile (10, 13) unter der Wirkung der ersten Kraft gegeneinander derart in Drehung versetzbar sind, dass durch die Schrägflächen (11, 11') eine Relativbewegung der Bauteile in Richtung der Drehachse (19) der Antriebseinrichtung (7) erzeugbar ist.

2. Kopfstütze nach Anspruch 1, **dadurch gekennzeichnet, dass** die zweite Kraft nach dem Lösen einer Verriegelungseinrichtung (8) erzeugbar ist.

3. Kopfstütze nach Anspruch 1 oder 2, **dadurch gekennzeichnet, dass** beide Bauteile (10, 13) miteinander wirkende, parallel verlaufende Schrägflächen (11, 11') aufweisen.

4. Kopfstütze nach Anspruch 1 bis 3, **dadurch gekennzeichnet, dass** die Kopfstütze (4) über einen Gelenkhebel mit der Rückenlehne (3) des Fahrzeugsitzes (1) drehbeweglich verbunden ist, dessen sich jenseits der Drehachse erstreckender Hebelarm (14) von der Antriebseinrichtung nach hinten verlagerbar ist, wodurch die Kopfstütze als Ganzes zum Kopf (24) des Sitzinsassen hin bewegbar ist.

5. Kopfstütze nach Anspruch 1 bis 3, **dadurch gekennzeichnet, dass** die Kopfstütze (4) einen Grundkörper (17) und ein gegenüber diesem unter der Wirkung der Antriebseinrichtung (7) zum Kopf (24) des Sitzinsassen hin verlagerbares Polstersegment (16) aufweist.

6. Kopfstütze nach einem der vorhergehenden Ansprüche, **dadurch gekennzeichnet, dass** die Bauteile (10, 13) zueinander gleitreibend relativbeweglich sind.

7. Kopfstütze nach einem der vorhergehenden Ansprüche, **dadurch gekennzeichnet, dass** die Antriebseinrichtung (7) mindestens drei zueinander bewegliche Bauteile (10, 13.1, 13.2) aufweist, von denen das mittlere Bauteil (10) gegenüber den anderen, drehfesten Bauteilen (13.1, 13.2) drehbar ist.

8. Kopfstütze nach einem der vorhergehenden Ansprüche, **dadurch gekennzeichnet, dass** die Bauteile (10, 13.1, 1.2) in Gebrauchsstellung teleskopartig ineinander angeordnet sind.

9. Kopfstütze nach Anspruch 8, **dadurch gekennzeichnet, dass** die Schrägflächen (11, 11') auf der inneren und/oder äußeren Radialfläche mindestens eines Bauteils (10) angeordnet und gewindeartig ausgebildet ist/sind.

10. Kopfstütze nach einem der Ansprüche 5 bis 9, **dadurch gekennzeichnet, dass** die Verriegelungseinrichtung (8) das Polstersegment (16) unmittelbar am Grundkörper (17) verriegelt.

11. Kopfstütze nach einem der vorhergehenden Ansprüche, **dadurch gekennzeichnet, dass** die mindestens eine Schrägfläche (11) eine Verzahnung aufweist, mittels derer die Kopfstütze (4) spätestens beim Erreichen der Sicherheitsstellung zumindest temporär arretierbar ist.

12. Kopfstütze nach einem der vorhergehenden Ansprüche, **dadurch gekennzeichnet, dass** die erste Kraft durch einen mechanischen oder chemischen Energiespeicher erzeugbar ist.

13. Fahrzeugsitz mit Kopfstütze nach einem der vorhergehenden Ansprüche, **dadurch gekennzeichnet, dass** die erste Kraft und/oder die Kraft zur Entriegelung der Verriegelungseinrichtung (8) zumindest teilweise im Fahrzeugsitz (1) durch die Massenträgheit des Sitzinsassen erzeugbar ist.

14. Fahrzeugsitz mit Kopfstütze nach einem der vorhergehenden Ansprüche, **dadurch gekennzeichnet, dass** die erste Kraft und/oder die Kraft zur Entriegelung der Verriegelungseinrichtung (8) zumindest teilweise durch eine unfallbedingte Verlagerung des Fahrzeugsitzes (1) oder Teile desselben relativ zur Fahrzeugkarosserie erzeugbar ist.

15. Fahrzeugsitz mit Kopfstütze nach einem der vorhergehenden Ansprüche, **dadurch gekennzeichnet, dass** die erste Kraft und/oder die Kraft zur Entriegelung der Verriegelungseinrichtung (8) zumindest teilweise durch die Deformation der Fahrzeugkarosserie erzeugbar ist.

16. Fahrzeugsitz mit Kopfstütze nach einem der vorhergehenden Ansprüche, **dadurch gekennzeichnet, dass** die erste Kraft und/oder die Kraft zur Entriegelung der Verriegelungseinrichtung (8) zumindest teilweise durch einen Gurtstraffer erzeugbar ist.

17. Fahrzeugsitz mit Kopfstütze nach einem der Ansprüche 13 bis 16, **gekennzeichnet durch** zwischen dem Krafterzeugungsort und der Kopfstütze (4) angeordnete Kraftübertragungsmittel (31).

18. Fahrzeugsitz mit Kopfstütze nach Anspruch 17, **dadurch gekennzeichnet, dass** die Kraftübertragungsmittel (31) als Bowdenzug (32) ausgebildet sind.

## Claims

1. Head restraint (4) for a vehicle seat (1), in which at least a head restraint subsection facing the seat occupant's head (24) can be caused by an accident to shift from a use position toward the seat occupant's head into a safety position under the action of a driving device (7), the driving device (7) having at least two components (10, 13) which are movable with respect to each other under the action of a first force and of which at least one component (10) has an oblique surface (11) which acts on the other component (13), is inclined in relation to the first direction of force and by means of which a second force which deviates from the first direction of force and can be transmitted to the head restraint (4) can be produced, **characterized in that** the relative movement between the components (10, 13) is translatory and rotatory and the components (10, 13) can be set into rotation in relation to each other under the action of the first force in such a way that a relative movement of the components in the direction of the axis of rotation (19) of the driving device (7) is producible by the oblique surfaces (11, 11').

2. Head restraint according to Claim 1, **characterized in that** the second force can be produced after release of a locking device (8).

3. Head restraint according to Claim 1 or 2, **characterized in that** both components (10, 13) have oblique surfaces (11, 11') which act with each other and run parallel.

4. Head restraint according to Claims 1 to 3, **characterized in that** the head restraint (4) is connected rotatably to the backrest (3) of the vehicle seat (1) via an articulated lever whose lever arm (14) which extends on the other side of the axis of rotation can be shifted rearward by the driving device, as a result of which the head restraint can be moved as a whole toward the seat occupant's head (24).

5. Head restraint according to Claims 1 to 3, **characterized in that** the head restraint (4) has a basic body (17) and a padded segment (16) which can be shifted in relation to the latter toward the seat occupant's head (24) under the action of the driving device (7).

6. Head restraint according to one of the preceding claims, **characterized in that** the components (10, 13) are movable relative to each other with sliding friction.

7. Head restraint according to one of the preceding claims, **characterized in that** the driving device (7) has at least three components (10, 13.1, 13.2) which are movable with respect to one another and of which the central component (10) is rotatable in relation to the other, rotationally fixed components (13.1, 13.2).

8. Head restraint according to one of the preceding claims, **characterized in that** the components (10, 13.1, 1.2) are arranged telescopically one inside another in the use position.

9. Head restraint according to Claim 8, **characterized in that** the oblique surfaces (11, 11') are arranged on the inner and/or outer radial surface of at least one component (10) and are designed in the manner of a thread.

10. Head restraint according to one of Claims 5 to 9, **characterized in that** the locking device (8) locks the padded segment (16) directly to the basic body (17).

11. Head restraint according to one of the preceding claims, **characterized in that** the at least one oblique surface (11) has a toothing by means of which the head restraint (4) can be locked at least temporarily at the latest when the safety position is reached.

12. Head restraint according to one of the preceding claims, **characterized in that** the first force can be produced by a mechanical or chemical energy store.

13. Vehicle seat with a head restraint according to one of the preceding claims, **characterized in that** the first force and/or the force for unlocking the locking device (8) can be produced at least partially in the vehicle seat (1) by the inertia of the seat occupant.

14. Vehicle seat with a head restraint according to one of the preceding claims, **characterized in that** the first force and/or the force for unlocking the locking device (8) can be produced at least partially by an accident-induced shifting of the vehicle seat (1) or of parts of the same relative to the vehicle body.

15. Vehicle seat with a head restraint according to one of the preceding claims, **characterized in that** the first force and/or the force for unlocking the locking device (8) can be produced at least partially by deformation of the vehicle body.

16. Vehicle seat with a head restraint according to one of the preceding claims, **characterized in that** the first force and/or the force for unlocking the locking device (8) can be produced at least partially by a belt tensioner.

17. Vehicle seat with a head restraint according to one of Claims 13 to 16, **characterized by** force transmission means (31) arranged between the force production site and the head restraint (4).

18. Vehicle seat with a head restraint according to Claim 17, **characterized in that** the force transmission means (31) are designed as a Bowden cable (32).

## Revendications

1. Appui-tête (4) pour un siège de véhicule (1), dans lequel au moins une pièce partielle de l'appui-tête tournée vers la tête (24) de l'occupant du siège peut être déplacée dans le cas d'un accident sous l'effet d'un dispositif d'entraînement (7) d'une position d'utilisation vers la tête de l'occupant du siège dans une position de sécurité, le dispositif d'entraînement (7) présentant au moins deux composants (10, 13) déplaçables l'un par rapport à l'autre sous l'effet d'une première force, dont au moins un composant (10) présente une surface oblique (11) agissant sur l'autre composant (13) et inclinée par rapport à la direction de la première force, au moyen de laquelle peut être produite une deuxième force s'écartant de la direction de la première force et pouvant être transmise à l'appui-tête (4), **caractérisé en ce que** le mouvement relatif entre les composants (10, 13) est un mouvement de translation et de rotation, et les composants (10, 13) peuvent être mis en rotation l'un par rapport à l'autre sous l'effet de la première force de telle sorte qu'un mouvement relatif des composants dans la direction de l'axe de rotation (19) du dispositif d'entraînement (7) puisse être produit par les surfaces obliques (11, 11').

2. Appui-tête selon la revendication 1, **caractérisé en ce que** la deuxième force peut être produite après la libération d'un dispositif de verrouillage (8).

3. Appui-tête selon la revendication 1 ou 2, **caractérisé en ce que** les deux composants (10, 13) présentent des surfaces obliques (11, 11') s'étendant parallèlement et agissant l'une avec l'autre.

4. Appui-tête selon les revendications 1 à 3, **caractérisé en ce que** l'appui-tête (4) est connecté de manière mobile en rotation au dossier (3) du siège du véhicule (1) par le biais d'un levier articulé dont le bras de levier (14) s'étendant de chaque côté de l'axe de rotation peut être déplacé vers l'arrière par le dispositif d'entraînement, de sorte que l'appui-tête puisse être déplacé dans sa totalité vers la tête (24) de l'occupant du siège.

5. Appui-tête selon les revendications 1 à 3, **caractérisé en ce que** l'appui-tête (4) présente un corps de base (17) et un segment de rembourrage (16) pouvant être déplacé par rapport à celui-ci sous l'effet du dispositif d'entraînement (7) vers la tête (24) de l'occupant du siège.

6. Appui-tête selon l'une quelconque des revendications précédentes, **caractérisé en ce que** les composants (10, 13) sont déplaçables par frottement glissant l'un par rapport à l'autre.

7. Appui-tête selon l'une quelconque des revendications précédentes, **caractérisé en ce que** le dispositif d'entraînement (7) présente au moins trois composants (10, 13.1, 13.2) déplaçables les uns par rapport aux autres, dont le composant central (10) peut tourner par rapport aux autres composants fixes en rotation (13.1, 13.2).

8. Appui-tête selon l'une quelconque des revendications précédentes, **caractérisé en ce que** les composants (10, 13.1, 13.2) sont disposés les uns dans les autres de manière télescopique dans la position d'utilisation.

9. Appui-tête selon la revendication 8, **caractérisé en ce que** les surfaces obliques (11, 11') sont disposées sur la surface radiale intérieure et/ou extérieure d'au moins un composant (10) et sont réalisées sous forme filetée.

10. Appui-tête selon l'une quelconque des revendications 5 à 9, **caractérisé en ce que** le dispositif de verrouillage (8) du segment de rembourrage (16) se verrouille directement au corps de base (17).

11. Appui-tête selon l'une quelconque des revendications précédentes, **caractérisé en ce que** l'au moins une surface oblique (11) présente une denture au moyen de laquelle l'appui-tête (4) peut être bloqué au moins temporairement au plus tard en atteignant la position de sécurité.

12. Appui-tête selon l'une quelconque des revendications précédentes, **caractérisé en ce que** la première force peut être produite par un accumulateur d'énergie mécanique ou chimique.

13. Siège de véhicule avec un appui-tête selon l'une quelconque des revendications précédentes, **caractérisé en ce que** la première force et/ou la force pour déverrouiller le dispositif de verrouillage (8) peuvent être produites au moins en partie dans le siège du véhicule (1) par l'inertie de masse de l'occupant du siège.

14. Siège de véhicule avec un appui-tête selon l'une quelconque des revendications précédentes, **caractérisé en ce que** la première force et/ou la force pour déverrouiller le dispositif de verrouillage (8) peuvent être produites au moins en partie par un décalage par rapport à la carrosserie du véhicule du siège du véhicule (1) ou de pièces de celui-ci, causé par un accident.

15. Siège de véhicule avec un appui-tête selon l'une quelconque des revendications précédentes, **caractérisé en ce que** la première force et/ou la force pour déverrouiller le dispositif de verrouillage (8) peuvent être produites au moins en partie par la déformation de la carrosserie du véhicule.

16. Siège de véhicule avec un appui-tête selon l'une quelconque des revendications précédentes, **caractérisé en ce que** la première force et/ou la force pour déverrouiller le dispositif de verrouillage (8) peuvent être produites au moins en partie par un enrouleur de ceinture.

17. Siège de véhicule avec un appui-tête selon l'une quelconque des revendications 13 à 16, **caractérisé par** des moyens de transfert de force (31) disposés entre le lieu de génération de force et l'appui-tête (4).

18. Siège de véhicule avec un appui-tête selon la revendication 17, **caractérisé en ce que** les moyens de transfert de force (31) sont réalisés sous forme de câble Bowden (32).
